# EUROPEAN PATENT SPECIFICATION

(11) **EP 1 536 936 B1**
(45) Date of publication and mention of the grant of the patent: **21.08.2013**
(21) Application number: 03750926.2
(22) Date of filing: 15.09.2003
(51) Int. Cl.: B29C 45/56, B29C 47/00

(54) **APPARATUS AND METHOD FOR IMPROVING THE FLOW CHARACTERISTICS OF INJECTION MOULDING MATERIAL USING ULTRASONIC VIBRATION**
VORRICHTUNG UND VERFAHREN ZUR VERBESSERUNG DER FLIESSEIGENSCHAFTEN VON SPRITZGIESSMATERIAL DURCH VERWENDUNG VON ULTRASCHALL
APPAREIL ET PROCEDE PERMETTANT D'AMELIORER LES CARACTERISTIQUES D'ECOULEMENT DE MATIERE POUR MOULAGE PAR INJECTION AU MOYEN DE VIBRATIONS ULTRASONORES

(30) Priority: 13.09.2002 GB 0221263
(43) Date of publication of application: 08.06.2005
(73) Proprietor: DKI Plast A/S, 4621 Gadstrup (DK)
(72) Inventor: ALLAN, Peter, Stewart, Uxbridge, Middlesex UB8 3PH (GB); HOLDEN, Andrew, Mark, Melton Mowbray, Leicestershire, LE13 0PB (GB)
(74) Representative: Bhimani, Alan
(86) International application number: PCT/GB2003/003996
(87) International publication number: WO 2004/024415

(56) References cited:
- WO-A-02/066218
- JP-A- 04 090 309
- US-A- 6 010 592
- PATENT ABSTRACTS OF JAPAN vol. 0151, no. 64 (M-1106), 24 April 1991 (1991-04-24) -& JP 03 032813 A (MURATA MFG CO LTD), 13 February 1991 (1991-02-13)
- PATENT ABSTRACTS OF JAPAN vol. 0181, no. 33 (M-1571), 4 March 1994 (1994-03-04) -& JP 05 318543 A (TOEI HANBAI KK), 3 December 1993 (1993-12-03)

## Description

The present invention relates to an apparatus and method for improving the flow characteristics of injection moulding. The invention has particular application with thermoplastics materials but can be used with any suitable material capable of being injection moulded.

The application of high frequency oscillations to a polymer is known to have an ameliorative effect on the melt flow characteristics of the polymer. Such an improvement would appear to have particular advantage in injection moulding processes, since there is evidence to suggest that the application of vibration to a thermoplastic moulding grade material improves the flow and distribution of the material in the moulding tool during the injection moulding process. The quality of the produced moulded article has also been shown to be improved.

In fibre-reinforced inj ection moulding, it has been found that the application of vibration to a thermoplastic moulding grade material is effective in promoting both impregnation of the moulding grade material into the fibre reinforcement and wetting out (i.e. bonding) between the moulding grade material and the fibre reinforcement.

The application of high frequency oscillations to a polymer during an injection moulding process, for example using ultrasonic vibration, is known to improve the melt flow characteristics of a polymer.

US 4500280 describes the use of an ultrasonic vibration aided feed device, which consists of a body having a feed channel and an ultrasonic vibration generator connected to the body by an intermediate arm. In use, the feed device is positioned between the screw barrel and the nozzle of a standard inj ection moulding apparatus, such that the moulding material passes from the screw barrel into the moulding tool, via the feed channel. High frequency vibrations from the vibration generator are transmitted to the body through the intermediate arm, whereby moulding material passing through the feed channel is indirectly subjected to vibration. The use of vibration generators having a frequency equal to 20kW or 40kHz were found to be satisfactory in improving the melt flow characteristics of the moulding material. However, in order to incorporate the feed device between the screw barrel and the nozzle, the whole injection moulding apparatus has to be reconfigured, which can be both costly and time consuming.

US5885495 describes a purpose-built injection head for an injection moulding apparatus, which includes an assembly for applying vibration to a moulding grade material. The assembly includes a chamber between the screw barrel and the nozzle of the injection head, wherein the chamber has an inlet valve and outlet valve for controlling the passage of material into and out of the chamber. In use, with the outlet valve in a closed position, the inlet valve is opened to allow a volume of material to enter the chamber. The inlet valve is then closed and the chamber is subjected to ultrasonic vibration to improve the melt flow characteristics of the moulding grade material. After a predetermined period of vibration, the outlet valve is opened to allow the moulding grade material to be injected through the nozzle. Since the vibration is not applied during the injection phase ofthe moulding process, the overall process times for the apparatus require significant alteration from standard injection moulding cycle times. Hence, the productivity of the injection moulding apparatus is reduced. Further, since the injection head is purpose-built, it has a nozzle arrangement which differs from that of a standard injection moulding apparatus. Therefore, the injection head cannot be retrofitted to existing apparatus.

It is also known that ultrasonic vibration can be applied directly to the screw of the injection moulding machine, as described in US 6203747, to apply vibration to the moulding material whilst in the screw barrel prior to injection into the moulding tool. However, this also involves the manufacture of a purpose-built injection moulding machine, which precludes simple retrofitting to existing apparatus.

Further, US 5017311 describes the application of high frequency vibration to the whole mould cavity of a moulding tool, using an ultrasonic vibration device attached to the moving half of the mould cavity. The apparatus is purported to provide a remarkable improvement in the apparent fluidity of the moulding material at a vibration frequency of 19.15 kHz. As this involves the vibration of the whole moulding tool, a specially designed injection moulding apparatus is required. Alternatively, the moulding material is vibrated through localized vibration of the tool cavity, once the mould cavity has been filled, thus increasing the moulding cycle times and, hence, reducing the productivity of the injection moulding apparatus.

US 6,010,592 discloses a system for forcing liquids or melts through small orifices at high speed to extrude thin fibres or atomize the fluids. Ultrasonic agitation is applied directly to the fluid as it is forced through the die under high pressure. When applied to polymer extrusions to form polymer fibres air bubbles are induced in the fibres due to induced cavitation.

WO 02/066218 discloses a system that ultrasonically vibrates molten copolymers to improve mixing and to improve bonding between the two or more components of the copolymer.

JP 03032813 discloses a system for moulding in which the molten material is ultrasonically vibrated by direct contact with a vibrator as it is injected.

JP 05318543 discloses a system for blow moulding plastic articles wherein a sliding core of the tool is ultrasonically vibrated in direct contact with the plastic and is then removed before air is injected

JP 04090309 discloses an apparatus for injection moulding according to the preamble of claim 1.

It is an object of the invention to provide an improved apparatus.

According to the present invention, there is provided an apparatus according to claim 1.

A portion of the vibration device extends at least partially into the flow path for directly vibrating material in the flow path.

In a further preferred embodiment, the vibration device extends transverse to the longitudinal axis of the flow path, with an end portion of the vibration device arranged for direct contact with material passing through the flow path in use.

Preferably, the vibration device consists of an ultrasonic probe, and the probe is arranged for direct contact with material in the flow path.

The vibration device preferably operates at a frequency of between 10 kHz to 50 kHz.

The flow path is provided in an injection moulding tool and the moulding tool has a fixed part that remains stationary relative to an injection barrel during the normal injection moulding process and a moving part which is adapted to move relative to the fixed part during the normal injection moulding process, and the flow path is formed in the fixed part of an injection moulding tool.

The vibration device is preferably mounted on the part of the moulding tool having the flow path.

In a further embodiment, related to but not part of the invention, the flow path is formed in a die block of an extrusion apparatus, and the vibration device may be mounted on the die block.

Conveniently, the vibration device is mounted on the apparatus using non-metallic seating means, to prevent metal-to-metal contact. Preferably, the non-metallic seating means also provides a seal about the vibration means.

In an alternative arrangement, a seal is provided about the vibration means at a nodal point on the vibration means where little or no vibration occurs. In which case, the seal may comprise a metallic seal means.

Preferably, the vibration means comprises a sonotrode.

According to a further aspect of the invention, there is provided a method according to claim 11.

Preferably, the contact of the material with the vibration device occurs at a position between the injection barrel and the shape forming part.

Embodiments of the invention will now be described, by way of example only, with reference to the accompanying drawings, in which:
Figure 1 is a schematic cross-section through part of an injection moulding apparatus for use in accordance with a first embodiment of the invention, showing the mould tool in an open position, prior to injection ;
Figure 2 is a view similar to Figure 1 with the tool closed, prior to injection ;
Figure 3 is a view similar to Figure 2, during injection;
Figure 4 is a view similar to Figure 1, with the tool in an open position, after injection;
Figure 5 is a schematic cross-section through part of an extrusion apparatus not part of the claimed invention.
Figure 6 is a schematic cross-section through part of an injection moulding apparatus in accordance with a further embodiment of the invention;
Figure 7 is a schematic cross-section through part of an extrusion apparatus that is not part of the claimed invention;
Figure 8 is a perspective view of a modified sonotrode, for use with apparatus in accordance with the invention; and
Figure 9 is a graph showing the effect of ultrasonic vibration on polymer flow.

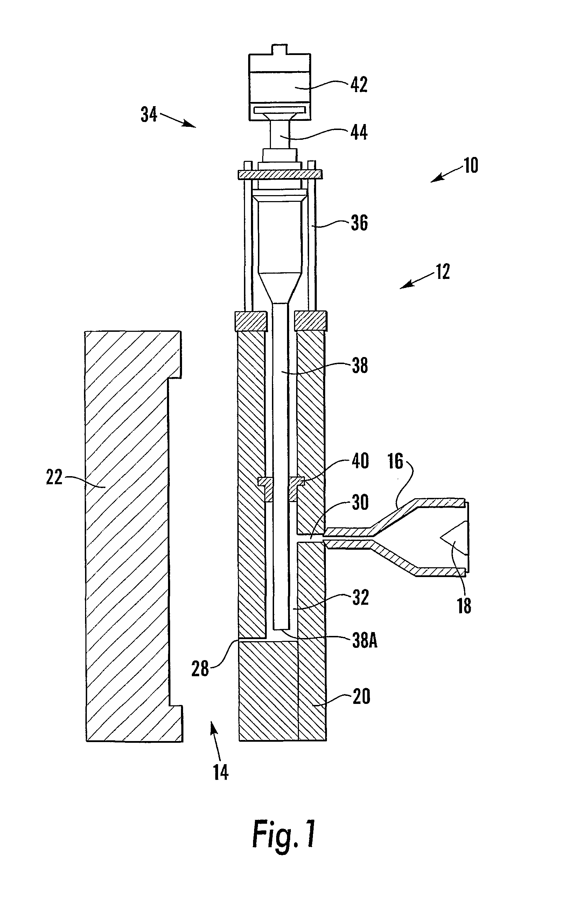

Referring to Figures 1 to 4, an injection moulding apparatus, indicated generally at 10, includes a moulding tool 12 having a mould cavity indicated at 14, i. e. the shape forming part of the apparatus.

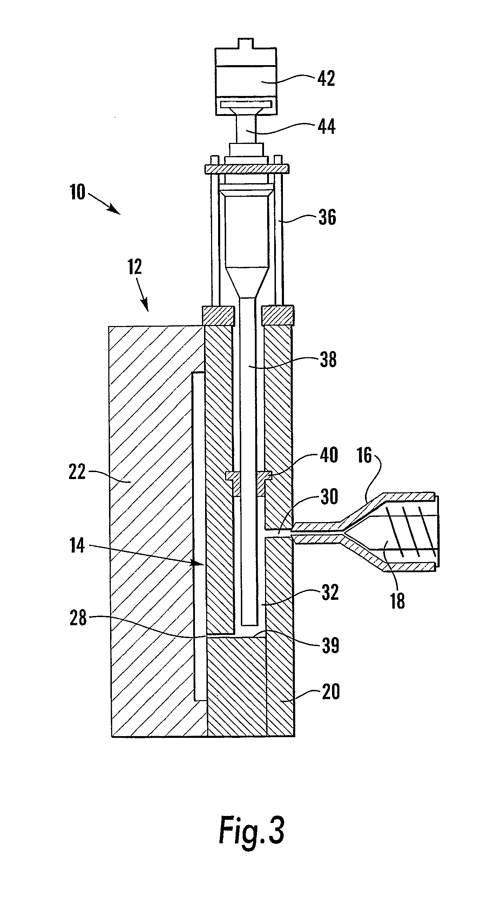

The apparatus 10 further includes a barrel 16 of known construction, having a screw 18 which is movable between a retracted position, as shown in Figures 1, 2 and 4, and a forward position as shown in Figure 3.

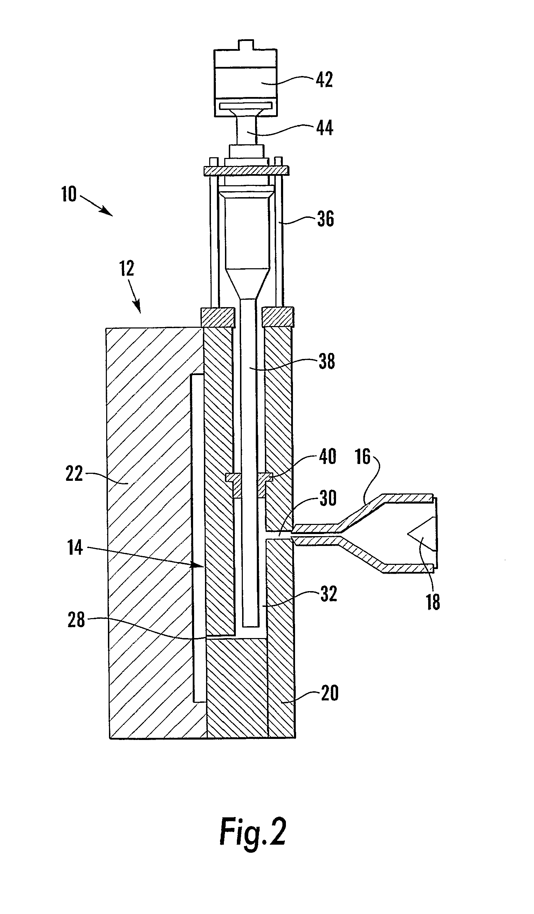

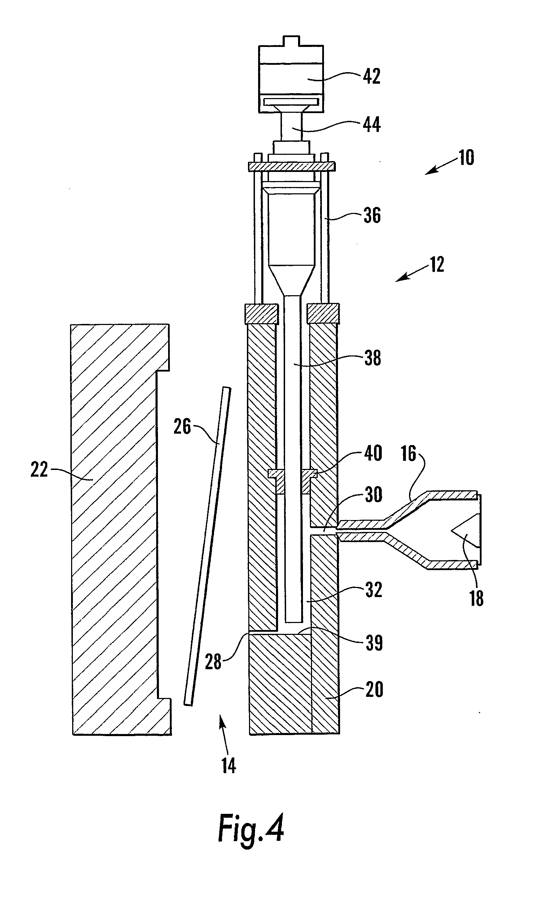

The moulding tool 12 consists of a fixed part 20 which in use remains stationary relative to the barrel 16, and a moving part 22 which is movable relative to the fixed part 20, between an open position as shown in Figures 1 and 4, and a closed position as shown in Figures 2 and 3.

The fixed part 20 of the moulding tool 12 includes an injection gate 28, through which thermoplastic moulding grade material passes into the mould cavity 14 during the injection moulding process, as will be described below.

The fixed part 20 has an inlet channel 30 and a central chamber 32. The inlet channel 30, central chamber 32 and injection gate 28 form a melt stream flow path, through which thermoplastic moulding material flows from the barrel 16 to the moulding tool 12, in use.

An ultrasonic vibration device, indicated generally at 34, is mounted to the upper end of the fixed part 20 by a frame 36. The ultrasonic vibration device 34 includes an ultrasonic probe, hereinafter referred to as the sonotrode 38, which extends from the frame 36 into the central chamber 32 to a depth below the inlet channel 30. Hence, a length of the sonotrode 38 extends at least partially into the melt stream flow path of the moulding tool 12. The arrangement is configured so that a substantial portion of the material passing through the chamber 32 from the inlet channel 30 to.the injection gate 28 passes adjacent an end surface 38A ofthe sonotrode, between the end surface 38A and an opposing wall 39 of the chamber, where energy from the sonotrode is imparted into the material.

A sealed seating ring 40 is provided in the central chamber 32, for centrally locating the sonotrode 38 in the chamber 32 and for preventing moulding material from escaping up through an open end ofthe chamber 32. The seating ring 40 is manufactured from a suitable thermoplastic or ceramic material, to prevent metal-metal contact of the sonotrode 38 and the tool 12. This is of particular importance at the high frequency level of vibration of the sonotrode 38, which might otherwise cause the sonotrode 38 to weld to the tool 12 or seating ring 40, if metal-metal contact existed between the sonotrode 38 and the tool 12 or seating ring 40, and thus risk fracture of the sonotrode 38.

The vibration device 34 includes a converter 42 mounted at the upper end of the sonotrode 38, for converting electrical energy supplied via an auxiliary power source, not illustrated, into high frequency mechanical vibration, for example between 10 kHz to 5 0 kHz. A booster 44 is provided beneath the converter 42, for boosting the signal from the converter 42 to the sonotrode 38.

In use, the injection gate 28 and the channel 30 and the chamber 32 in the first part of the tool 20 are heated to temperatures suitable for the processing of the particular moulding material being used. This is achieved by using a hot runner system generally known in the art to keep the thermoplastic molten prior to injection into the cooler mould cavity.

Operation of the moulding apparatus 10 during a moulding cycle will now be described.

For the purposes of description, it is assumed that a first moulding cycle has already been carried out and the injection gate 28, central chamber 32 and inlet channel 30 of the fixed part of the moulding tool 12 are at least substantially filled with thermoplastic moulding material. A volume of material V₁ is required to fill the injection gates 28, central chamber 32 and inlet channel 30 of the fixed part of the moulding tool 12.

A second moulding cycle starts with the moulding tool 12 in the open position having the screw 18 in the back position, as shown in Figure 1, and the ultrasonic vibration device 34 in a deactivated condition. With the screw 18 in the back position, a melt reservoir of thermoplastic moulding material is present in the barrel 16, having a volume V₂. A volume of material V₃ is receivable in the compartment 24 of the mould cavity 14 when the moulding tool 12 is in the closed position shown in Figures 2 and 3, wherein V₂ is greater than V₃ and V₁ is not greater than V₂. The difference in volume between V₃ and V₂ provides a cushion for the volume of material in the moulding tool 12 after injection, to maintain pressure on the volume of material in the moulding tool 12 after injection, i.e. when the screw 18 is in the forward position shown in Figure 3, as will be described below.

The moving part 22 of the moulding tool 12 then moves to the closed position shown in Figure 2. Once the moulding tool 12 is closed, the ultrasonic vibration device 34 is activated for a predetermined period, prior to an injection phase commencing. Whilst the ultrasonic vibration device 34 is still activated, an injection phase commences, in which the screw 18 moves towards the forward position shown in Figure 3. As the screw 18 moves forward, the thermoplastic moulding material in the barrel 16 is injected into the fixed part 20, through the inlet channel 30. The pressure of the material entering the fixed part 20 from the barrel 16 forces the thermoplastic moulding material which is already present in the injection gate 28, central chamber 32 and inlet channel 30 into the mould cavity 14. As the screw 18 reaches the forward position, the mould cavity 14 fills until no further moulding material may pass through the injection gate 28. The volume of material remaining in the screw barrel 16 is continuously pushed into the fixed part 20, until the screw 18 finally reaches the forward position shown in Figure 3. The screw barrel is maintained in the forward position shown in Figure 3, until the material in the tool cavity has at least partially solidified, to maintain pressure on the volume of material in the moulding tool.

When the ultrasonic vibration device 34 is activated, the sonotrode 38 vibrates in the longitudinal direction at a fixed frequency within the central chamber 32. The vibration of the sonotrode directly imparts energy into the material passing through its zone of influence, which is predominantly between the end surface 38A of the sonotrode and the opposing wall 39 of the chamber 32. As already mentioned, the apparatus is configured such a significant proportion of the material passes at some point in the cycle between the end surface 38A of the sontotrode and the opposing wall 39 of the chamber, where it is directly affected by the sonotrode. This has the effect of improving the melt flow characteristics of said material. It will be appreciated that moulding material present in the zone of influence of the sonotrode 38 during activation of the sonotrode 38 will be affected by the ultrasonic vibrations.

At a predetermined stage in the injection phase, for example at the point where the mould cavity 14 becomes filled with moulding material, the ultrasonic vibration device 34 is switched off. Once sufficient cooling of the moulding material has occurred, the screw 18 is returned to the back position shown in Figure 4, to prepare a melt reservoir of thermoplastic moulding material in the barrel 16 for the next moulding cycle. The moving part of the moulding tool is then moved to the left as viewed, to the open position shown in Figure 4, and the moulded article is ejected.

During the above-described period of activation of the ultrasonic vibration device 34, i.e. in particular during the injection phase, it will be appreciated that vibration energy transmitted through the sonotrode 38 is transferred to at least a proportion of the volume of moulding material simultaneously present in the central chamber 32. This has the effect of improving the melt flow characteristics of the moulding material during the injection phase and prior to entry to the mould cavity as illustrated in the following example.

### Example:

Initial trials were carried out using a general-purpose Polypropylene (PP) inj ection moulding grade material to see if the ultrasonic vibration device had an influence on the flow performance of the material. An injection moulding apparatus, substantially as described with reference to Figures 1 to 4, was set up with the full injection shot capacity in the barrel to mould the component, but the injection time was set so that it could only mould a short shot volume partially filling a flat plaque component of approximately 25 g in weight.

A first set of mouldings was produced without the use of the ultrasonic vibration device, which produced short shot mouldings having a component weight of approximately 25g, as anticipated.

A second set of mouldings were then produced using the same shot volume and injection conditions but with the ultrasonic vibration device activated prior to the start of the injection cycle and during filling of the mould cavity, substantially as described above. The resultant mouldings were much larger than the first set and had a final weight of approximately 42 g.

A third set of mouldings was then produced without the use of the ultrasonic vibration device, which produced short shot mouldings as had been achieved in the first set of mouldings.

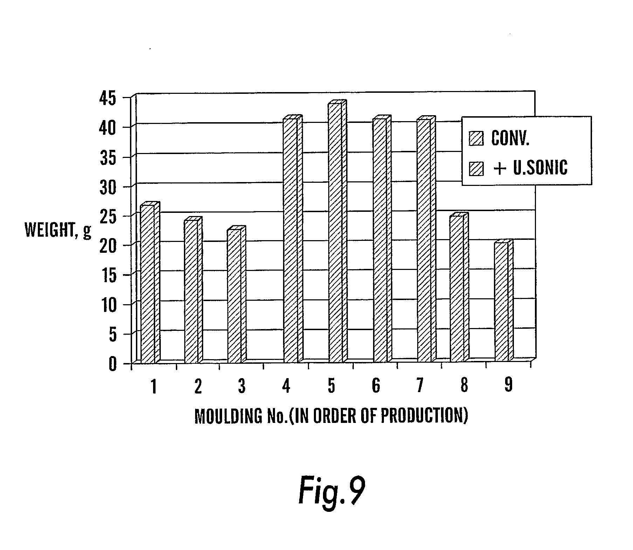

The results of the trials are presented in Figure 9.

It can be seen in Figure 9 that for the same injection time, the weight of each moulding achieved using the ultrasonic vibration device significantly increased (columns 4-7). This suggests that the use of the ultrasonic vibration device significantly improves the melt flow characteristics of the moulding grade material, to promote increased flow through the moulding tool.

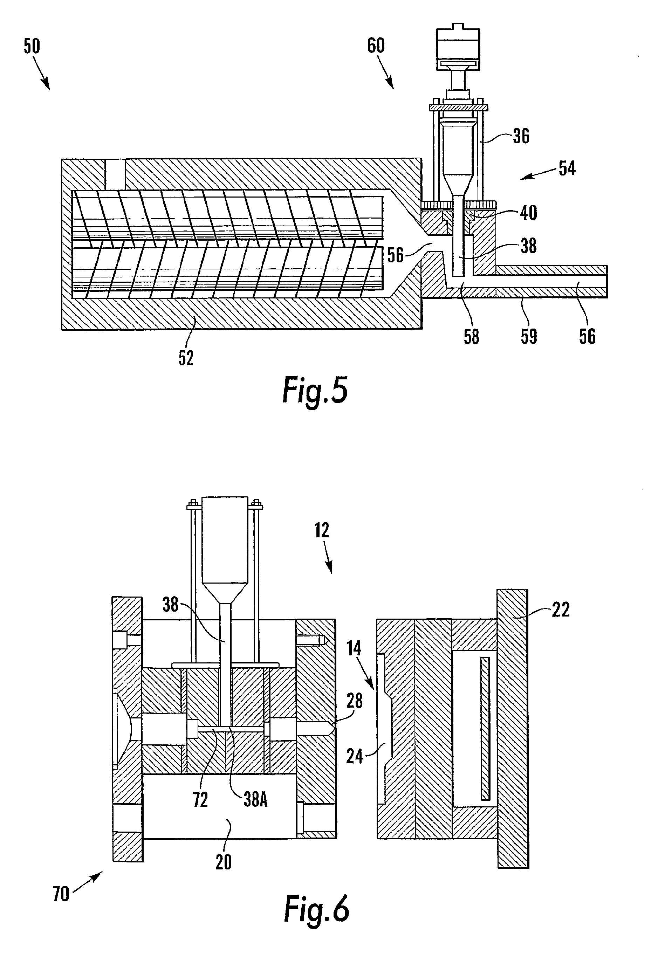

An extrusion apparatus, which does not form part of the claimed invention is shown in Figure 5, indicated generally at 50. A modified die block 54 having a die head 59 is mounted adjacent the outlet of an extruder barrel 52.

The die block 54 includes an inlet, a central chamber 58 and an outlet leading to the die head 59. The inlet, chamber 58 and outlet define a melt stream flow path 56 for passage of thermoplastic material from the extruder barrel 52 to the die head 59, i. e. the shape forming part of the apparatus.

An ultrasonic vibration device 60 in the form of a sonotrode is mounted on the die block 54, in a manner similar to that described above with reference to Figures 1 to 4. Where appropriate, common reference numerals are used in the following description of the apparatus 50.

As can be seen, the sonotrode 38 extends into the central chamber 58, i. e to at least partially extend into the extrusion flow path of material passing between the extruder barrel and the die head 59, for direct contact with at least a portion of material passing through the chamber 58 and in particular with material passing adjacent an end surface of the sonotrode and an opposing wall of the chamber 58. A sealed seating ring 40 is used to centralise the sonotrode 38 in the chamber 58 and prevents material from escaping through the open upper end of the chamber 58.

The ultrasonic device 60 is substantially the same as that described above in relation to Figures 1 to 4 and so the operation and construction of the device will not be described again in significant detail.

During extrusion of material from the extruder barrel 52, the ultrasonic vibration device 60 is activated to improve the melt flow characteristics of the extrusion grade material as it passes through the flow path 56, in particular the chamber 58. The ultrasonic device 60 may be activated continuously or discontinuously, during-extrusion depending on the effect required on the produced article.

During extrusion, material moves from the barrel 52, through the flow path 56 where it passes along a length of the sonotrode 38 towards the outlet 59, with a significant proportion of the material passing beneath the sonotrode 38. Since a portion of the sonotrode 38 is directly in the melt stream of the material, material passing through the chamber 58 is affected by the vibration energy from the sonotrode 38, as it comes into direct contact with the end of the vibrating sonotrode or passes through the zone of influence, substantially as described above.

Figure 6 shows an alternative embodiment of the invention, for injection moulding and 7 shows an extrusion apparatus, not pat of the claimed invention. In both Figures, common reference numerals are used where appropriate.

An injection moulding apparatus 70 is shown in Figure 6, includes a moulding tool 12 having a mould cavity indicated at 14. The mould cavity 14 has a single compartment 24, for producing a moulded article (not shown). The moulding tool 12 consists of a fixed part 20 which in use remains stationary relative to an injection barrel, and a moving part 22 which is movable relative to the fixed part 20, between an open position as shown, and a closed position (not shown).

The fixed part 20 of the moulding tool 12 includes an injection gate 28, through which thermoplastic moulding grade material passes into the mould cavity 14 during the injection moulding process. The fixed part 20 includes a melt stream flow path 72 having a longitudinal axis, along which thermoplastic moulding material flows through the fixed part of the moulding tool 12, in use.

A sonotrode 38 is mounted on the fixed part 20 of the moulding tool 12 extending transverse to the longitudinal axis of the flow path 72, with an end surface 38A of the sonotrode 38 forming a part of the wall of the flow path 72. It will be appreciated that the end surface of the sonotrode 38 is thus arranged for direct contact with material passing through the flow path 72 between the end surface 38A and the opposing wall of the flow path, in use.

The sonotrode 38 and flow path 72 are configured such that, in use, at least a significant proportion of material present between the walls of the flow path in the area adjacent the end surface of the sonotrode is in the zone of influence of the vibrating sonotrode 38, so that the sonotrode 38 has a direct influence in the melt stream flow path of material passing though the fixed part 20 of the tool 12, and not just on the material which comes into direct contact with the end surface. It will be understood that moulding material present in the zone of influence of the sonotrode 38 during activation of the sonotrode 38, i.e. simultaneously during injection of the material into the tool 12, will be affected by the ultrasonic vibrations, to improve the flow characteristics of the material.

Operation of the apparatus 70 is substantially the same as for the apparatus described with reference to Figures 1 to 4 and so is not described again.

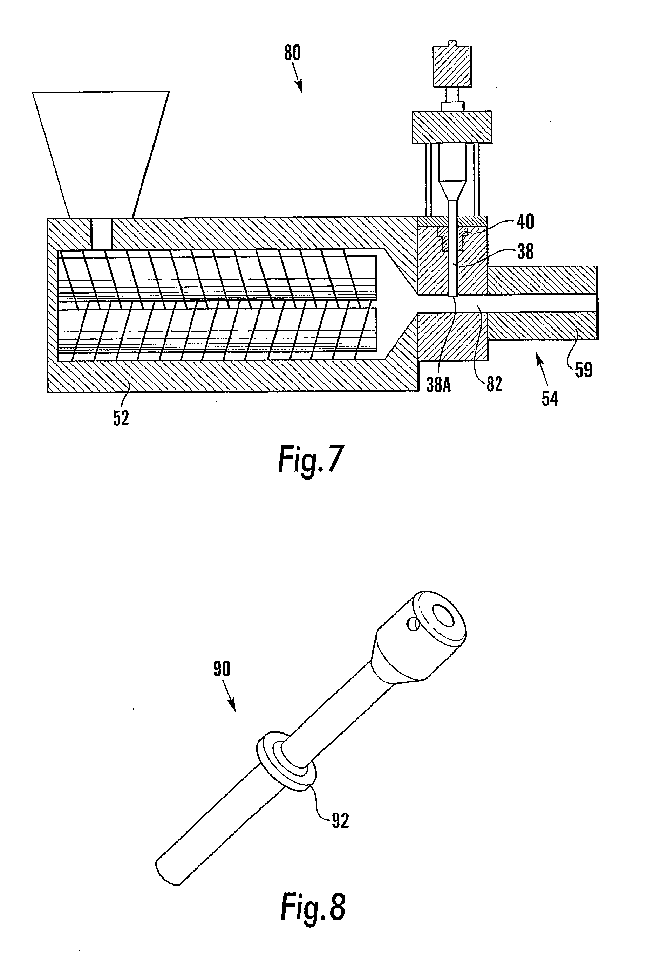

An extrusion apparatus 80 is shown in Figure 7, which corresponds substantially to the apparatus 50 described with reference to Figure 5, and therefore the same reference numerals are used where appropriate in the following description.

The apparatus 80 includes a modified die block 54 having die head 59, i.e. the shape forming part of the apparatus. The die block 54 is mounted adjacent the outlet of an extruder barrel 52. The die block 54 defines a melt stream flow path 82 having a longitudinal axis, for passage of thermoplastic material from the extruder barrel 52 to the die head 59.

A sonotrode 38 is mounted on a die block 54, extending transverse to the longitudinal axis of the flow path 82, with an end surface of the sonotrode 38 forming a part of the wall of the flow path 82. A non-metallic sealing ring 40 is provided to position the sonotrode and to act as a seal to prevent the extrusion material from escaping from the flow path around the sonotrode. The end surface 38A of the sonotrode 38 is thus arranged for direct contact with material passing through the flow path 82 in use. When activated, the sonotrode 38 has an ameliorative effect on the melt flow characteristics of material passing through the die block 54 within the zone of influence of the sonotrode.

Operation of the apparatus 70 is substantially the same as for the apparatus described with reference to Figure 5 and so is not described again.

Use of a non-metallic seating ring 40 to position the sonotrode relative to the melt stream flow path in the mould tool or die block, and to prevent moulding material from escaping around the sonotrode has been described in relation to the above embodiments. As previously discussed, a non-metallic seating ring is used to prevent metal-metal contact between the sonotrode and the tool or die block. This is of particular importance at the high frequency level of vibration of the sonotrode, for example to prevent the sonotrode from welding. to the tool or die block, or the seating ring. However, Figure 8 shows a modified sonotrode 90, which does not require a non-metal seating ring. Each sonotrode has at least one nodal point at which little or no vibration occurs. The position of the nodal point(s) will vary in dependance on a number of factors including the size and shape of the sonotrode and the temperature at which it is operated. For each specific application, the position of the or each nodal point can be calculated enabling the sonotrode to be clamped and/or sealed at a nodal point using metallic seal means without risk of the sonotrode welding to the seal means or the tool or die block. In the embodiment shown in Figure 8, a flange 92 is positioned at a nodal point so that the sonotrode can be clamped using metal seals which engage with the flange. The profile of the flange can be adapted to ensure a good seal is achieved. This arrangement can be used as an alternative to the non-metallic seating ring 40 in any of the embodiments described above to position the sonotrode and to prevent material from escaping around the sonotrode.

The described embodiments of the invention provide ultrasonic vibration through the use of a sonotrode directly in contact with the melt stream of an extrusion or injection moulding grade material between the extruder barrel and die head, or between the nozzle of a screw barrel and a tool cavity. During the extrusion or injection phase, a significant proportion of moulding material being extruded through a die block, or injected into a moulding tool, is directly vibrated by the sonotrode, including a substantial proportion of the material in the melt stream of the tool or die block, which passes through the zone of influence of the vibrating sonotrode during the injection or extrusion phase. This has been shown to improve the flow characteristics of the material being injected or extruded.

The ultrasonic vibration device of the described embodiments is of particular advantage in that it can be retrofitted to existing extrusion or injection moulding apparatus, without significantly altering the configuration of the existing apparatus. For example, a fixed tool part for an injection moulding apparatus can be provided, including a melt stream flow path and a sonotrode substantially as described above, which can then be used to simply replace the fixed part of a standard injection moulding apparatus, using the same tool cavity, without the need for significant alteration of the tool configuration.

The invention has further significant advantage, in that the vibration processes described in conjunction with the above embodiments substantially occur during a standard injection moulding cycle and thus can be applied without significantly altering the process times/mould cycle settings of existing machinery, therefore not significantly reducing the productivity of existing machinery.

The invention has application in an injection moulding tool having any number of compartments in the tool cavity, for example two or between three and ten compartments, as desired. Similarly the invention can be utilised in injection moulding tools having any number of gates, for example a single, dual or four gate tool.

Whilst the description of the preferred embodiments has referred to the injection moulding and extruding of thermoplastics material, the invention it is not limited to use with such materials but can be adapted for use in injection moulding or extruding any suitable material.

## Claims

1. Apparatus (10) for improving the flow characteristics of injection moulding material, the apparatus comprising:
a flow path formed in part of an injection moulding tool (12) through which a material to be injection moulded passes in use;
ultrasonic vibration means (34) arranged in a chamber (32) for direct contact with material passing through the flow path in use, for directly vibrating the material as it is being injected; and
**characterised in that**
the moulding tool (12) has a fixed part (20) that remains stationary relative to an injection barrel (16) during the normal injection moulding process and a moving part (22) which is adapted to move relative to the fixed (20) part during the normal injection moulding process,
the flow path is formed in the fixed part (20) of the injection moulding tool (12) and a length of the vibration means (34) extends into the flow path so that an end portion of the vibration device is arranged for direct contact with material passing through the flow path in use, and is configured so that, in use, a substantial portion of the material passing through the chamber (32) passes adjacent an end surface (38A) of the vibration means (34), between the end surface (38A) and an opposing wall (39), of the chamber.

2. Apparatus as claimed in claim 1 in which the vibration (34) means extends transverse to the longitudinal axis of the flow path.

3. Apparatus as claimed in claim 1 or 2, in which the vibration means (34) is mounted on the part (20) of the moulding tool having said flow path.

4. Apparatus as claimed in any preceding claim, in which the vibration means (34) is mounted on the apparatus using non-metallic seating means (40), to prevent metal-to-metal contact.

5. Apparatus as claimed in claim 4, in which the non-metallic seating means (40) also provides a seal about the vibration means (34).

6. Apparatus as claimed in any previous claim, in which a seal is provided about the vibration means (34) at a nodal point on the vibration means where little or no vibration occurs.

7. Apparatus as claimed in any one of claims 1 to 3, in which the seal comprises a metallic seal means provided about the vibration means (34) at a nodal point on the vibration means where little or no vibration occurs.

8. Apparatus as claimed in any preceding claim, in which the vibration means (34) comprises an ultrasonic probe.

9. Apparatus as claimed in any previous claim in which the vibration means comprises a sonotrode.

10. Apparatus as claimed in any preceding claim, in which the vibration means (34) operates at a frequency of between 10 kHz to 50 kHz.

11. A method of improving the flow characteristics of a material being injected from an injection barrel to a tool cavity of an injection moulding tool (12) in an apparatus as claimed in any one of claims 1 to 10 having a fixed part (20) that remains stationary relative to an injection barrel during the normal injection moulding process and moving part (22) which is adapted to move relative to the fixed part during the normal injection moulding process, comprising the steps of injecting a volume of material through the flow path formed in the fixed part (20) of the injection moulding tool (12), wherein material passing through the flow path is brought into direct contact with the ultrasonic vibration means (34) as the material is being injected.

12. A method as claimed in claim 11, in which the contact of the material with the vibration means (34) occurs at a position between the injection barrel and the tool cavity.

## Patentansprüche

1. Vorrichtung (10) zur Verbesserung der Fließeigenschaften von Spritzgießmaterial, wobei die Vorrichtung aufweist:
einen Strömungsweg, der in einem Teil eines Spritzgießwerkzeuges (12) ausgebildet ist, durch den ein für das Spritzgießen vorgesehenes Material bei Benutzung gelangt;
ein Ultraschallschwingungsmittel (34), das in einer Kammer (32) für einen direkten Kontakt mit dem Material angeordnet ist, das den Strömungsweg bei Benutzung passiert, um das Material direkt in Schwingungen zu versetzen, während es gespritzt wird; und
**dadurch gekennzeichnet, dass**
das Formwerkzeug (12) einen stationären Teil (20), der relativ zu einem Spritzzylinder (16) während des normalen Spritzgießvorganges stationär bleibt, und einen beweglichen Teil (22) aufweist, der ausgebildet ist, um sich relativ zum stationären Teil (20) während des normalen Spritzgießvorganges zu bewegen;
der Strömungsweg im stationären Teil (20) des Spritzgießwerkzeuges (12) ausgebildet ist und sich eine Länge des Schwingungsmittels (34) in den Strömungsweg hinein erstreckt, so dass ein Endabschnitt der Schwingungsvorrichtung für einen direkten Kontakt mit dem Material angeordnet ist, das bei Benutzung durch den Strömungsweg gelangt, und so ausgebildet ist, dass bei Benutzung ein wesentlicher Teil des durch die Kammer (32) gelangenden Materials angrenzend an eine Endfläche (38A) des Schwingungsmittels (34) zwischen der Endfläche (38A) und einer gegenüberliegenden Wand (39) der Kammer passiert.

2. Vorrichtung nach Anspruch 1, bei der sich das Schwingungsmittel (34) quer zur Längsachse des Strömungsweges erstreckt.

3. Vorrichtung nach Anspruch 1 oder 2, bei der das Schwingungsmittel (34) auf dem Teil (20) des Formwerkzeuges montiert ist, das den Strömungsweg aufweist.

4. Vorrichtung nach einem der vorhergehenden Ansprüche, bei der das Schwingungsmittel (34) auf der Vorrichtung bei Verwendung eines nichtmetallischen Aufnahmemittels (40) montiert ist, um eine metallische Berührung zu verhindern.

5. Vorrichtung nach Anspruch 4, bei der das nichtmetallische Aufnahmemittel (40) ebenfalls eine Dichtung um das Schwingungsmittel (34) bereitstellt.

6. Vorrichtung nach einem der vorhergehenden Ansprüche, bei der eine Dichtung um das Schwingungsmittel (34) in einem Knotenpunkt auf dem Schwingungsmittel vorhanden ist, wo eine geringe oder keine Schwingung auftritt.

7. Vorrichtung nach einem der Ansprüche 1 bis 3, bei der die Dichtung ein metallisches Dichtungsmittel aufweist, das um das Schwingungsmittel (34) in einem Knotenpunkt auf dem Schwingungsmittel bereitgestellt wird, wo eine geringe oder keine Schwingung auftritt.

8. Vorrichtung nach einem der vorhergehenden Ansprüche, bei der das Schwingungsmittel (34) eine Ultraschallsonde aufweist.

9. Vorrichtung nach einem der vorhergehenden Ansprüche, bei der das Schwingungsmittel eine Sonotrode aufweist.

10. Vorrichtung nach einem der vorhergehenden Ansprüche, bei der das Schwingungsmittel (34) mit einer Frequenz von zwischen 10 kHz bis 50 kHz arbeitet.

11. Verfahren zur Verbesserung der Fließeigenschaften eines aus einem Spritzzylinder in einen Werkzeughohlraum eines Spritzgießwerkzeuges (12) in einer Vorrichtung nach einem der Ansprüche 1 bis 10 zu spritzenden Materials, die einen stationären Teil (20), der relativ zu einem Spritzzylinder während des normalen Spritzgießvorganges stationär bleibt, und einen sich bewegenden Teil (22) aufweist, der ausgebildet ist, um sich relativ zum stationären Teil während des normalen Spritzgießvorganges zu bewegen, das den folgenden Schritt aufweist: Spritzen einer Materialmenge durch den im stationären Teil (20) des Spritzgießwerkzeuges (12) ausgebildeten Strömungsweg, wobei das durch den Strömungsweg gelangende Material in direkten Kontakt mit dem Ultraschallschwingungsmittel (34) gebracht wird, während das Material gespritzt wird.

12. Verfahren nach Anspruch 11, bei dem der Kontakt des Materials mit dem Schwingungsmittel (34) in einer Position zwischen dem Spritzzylinder und dem Werkzeughohlraum erfolgt.

## Revendications

1. Appareil (10), destiné à améliorer les caractéristiques d'écoulement d'un matériau de moulage par injection, l'appareil comprenant :
une trajectoire d'écoulement, formée en partie à partir d'un outil de moulage par injection (12), à travers laquelle le matériau devant être moulé par injection passe en service ;
un moyen de vibrations ultrasonores (34), agencé dans une chambre (32), en vue d'un contact direct avec le matériau passant à travers la trajectoire d'écoulement en service, pour faire vibrer directement le matériau lors de son injection ; et
**caractérisé en ce que**
l'outil de moulage (12) comporte une partie fixe (20), restant stationnaire par rapport à un cylindre d'injection (16) au cours du processus de moulage par injection normal, et une partie mobile (22), adaptée pour se déplacer par rapport à la partie fixe (20) au cours du processus de moulage par injection normal ;
la trajectoire d'écoulement est formée dans la partie fixe (20) de l'outil de moulage par injection (12), une longueur du moyen de vibrations (34) s'étendant dans la trajectoire d'écoulement, de sorte qu'une partie d'extrémité du dispositif de vibrations est agencée en vue d'un contact direct avec le matériau passant à travers la trajectoire d'écoulement en service, et est configurée de sorte qu'en service, une partie substantielle du matériau passant à travers la chambre (32) passe près d'une surface d'extrémité (38A) du moyen de vibrations (34), entre la surface d'extrémité (38A) et une paroi opposée (39) de la chambre.

2. Appareil selon la revendication 1, dans lequel le moyen de vibrations (34) s'étend de manière transversale par rapport à l'axe longitudinal de la trajectoire d'écoulement.

3. Appareil selon les revendications 1 ou 2, dans lequel le moyen de vibrations (34) est monté sur la partie (20) de l'outil de moulage comportant ladite trajectoire d'écoulement.

4. Appareil selon l'une quelconque des revendications précédentes, dans lequel le moyen de vibrations (34) est monté sur l'appareil par l'intermédiaire d'un moyen d'assise non métallique (40), pour empêcher un contact métal sur métal.

5. Appareil selon la revendication 4, dans lequel le moyen d'assise non métallique (40) établit en outre un joint autour du moyen de vibrations (34).

6. Appareil selon l'une quelconque des revendications précédentes, dans lequel un joint est établi autour du moyen de vibrations (34) au niveau d'un point nodal sur le moyen de vibrations, où il y a peu ou pas de vibrations.

7. Appareil selon l'une quelconque des revendications 1 à 3, dans lequel le joint comprend un moyen de joint métallique autour du moyen de vibrations (34), au niveau d'un point nodal sur le moyen de vibrations, où il y a peu ou pas de vibrations.

8. Appareil selon l'une quelconque des revendications précédentes, dans lequel le moyen de vibrations (34) comprend une sonde ultrasonore.

9. Appareil selon l'une quelconque des revendications précédentes, dans lequel le moyen de vibrations comprend une sonotrode.

10. Appareil selon l'une quelconque des revendications précédentes, dans lequel le moyen de vibrations (34) fonctionne à une fréquence comprise entre 10 kHz et 50 kHz.

11. Procédé d'amélioration des caractéristiques d'écoulement d'un matériau injecté à partir d'un cylindre d'injection dans une cavité d'outil d'un outil de moulage par injection (12) dans un appareil selon l'une quelconque des revendications 1 à 10, comportant une partie fixe (20), restant stationnaire par rapport à un cylindre d'injection au cours du processus de moulage par injection normal, et une partie mobile (22), adaptée pour se déplacer par rapport à la partie fixe au cours du processus de moulage par injection normal, comprenant les étapes d'injection d'un volume de matériau à travers la trajectoire d'écoulement formée dans la partie fixe (20) de l'outil de moulage par injection (12), le matériau passant à travers la trajectoire d'écoulement étant mis en contact direct avec le moyen de vibrations ultrasonores (34) lors de l'injection du matériau.

12. Procédé selon la revendication 11, dans lequel le contact entre le matériau et le moyen de vibrations (34) est établi au niveau d'une position située entre le cylindre d'injection et la cavité de l'outil.
